# EUROPÄISCHE PATENTSCHRIFT

(11) **EP 4 155 041 B1**
(45) Veröffentlichungstag und Bekanntmachung des Hinweises auf die Patenterteilung: **19.03.2025**
(21) Anmeldenummer: 22194588.4
(22) Anmeldetag: 08.09.2022
(51) Int. Cl.: B28B 11/24, C04B 40/02, C04B 33/32

(54) **VERFAHREN ZUR HERSTELLUNG VON ZIEGELN**
METHOD FOR MANUFACTURING BRICKS
PROCÉDÉ DE FABRICATION DE BRIQUES

(30) Priorität: 22.09.2021 AT 507482021
(43) Veröffentlichungstag der Anmeldung: 29.03.2023
(73) Patentinhaber: Wienerberger AG, 1100 Wien (AT)
(72) Erfinder: KURKA, Andreas, 1040 Wien (AT); RATH, Johannes, 1120 Wien (AT); GAGGL, Wolfgang, 2500 Baden (AT); FRÜH, Gottfried, 3034 Maria Anzbach (AT)
(74) Vertreter: Gibler & Poth Patentanwälte KG

(56) Entgegenhaltungen:
- WO-A1-02/081409
- BE-A- 510 028
- CN-A- 108 842 991
- GB-A- 965 000

## Beschreibung

Die Erfindung betrifft ein Verfahren zur Herstellung von Ziegeln gemäß dem Patentanspruch 1.

Es ist bekannt, dass bei der kommerziellen Ziegelherstellung große Mengen an Kohlenstoffdioxid freigesetzt und in die Umwelt emittiert werden. Einerseits wird bei dem Transport der Ausgangsstoffe von den Abbaustätten zu den Ziegeleien mittels Lastkraftwagen Kohlenstoffdioxid freigesetzt und andererseits wird bei der Herstellung der Ziegel selbst in den Ziegeleien, insbesondere in dem Brennschritt durch Dekomposition von Karbonaten in den Rohlingen, Kohlenstoffdioxid emittiert.

Aus der WO 02/081409 A1 ist ein Verfahren zur Herstellung von Ziegeln bekannt, wobei die Rohlinge vor dem Brennen zusätzlich eine hohe Menge Kalk beigemischt wird.

Aus der BE 510 028 A ist ein Verfahren zur Herstellung von Ziegeln bekannt, wobei die Ziegel angefeuchtet und anschließend bei Normaldruck oder Überdruck mit Kohlenstoffdioxid oder Kohlensäure über eine längere Zeit begast werden.

Aus der CN 108 842 991 A ist ein Verfahren zur Herstellung einer rutschfesten Fliese bekannt.

In Hinblick auf den Klimawandel und in Zeiten des steigenden Umweltbewusstseins ist es daher wichtig, die Kohlenstoffdioxidemissionen bei der Ziegelherstellung zu verringern.

Aufgabe der Erfindung ist es daher ein Verfahren eingangs genannter Art anzugeben, mit welchem die genannten Nachteile vermieden werden können, mit welchem Kohlenstoffdioxidemissionen bei der Ziegelherstellung verringert werden können.

Erfindungsgemäß wird dies durch die Merkmale des Patentanspruches 1 erreicht.

Dadurch ergibt sich der Vorteil, dass Kohlenstoffdioxidemissionen bei der Ziegelherstellung verringert werden können und eine bessere Kohlenstoffdioxidbilanz als bei der herkömmlichen Ziegelherstellung erreicht werden kann. Dadurch, dass in einem dem Brennschritt nachfolgenden Karbonaterzeugungsschritt der gebrannte Ziegel unter einem vorgebbaren Druck bei einer vorgebbaren Begasungsdauer mit Kohlenstoffdioxid begast wird, wird Kohlenstoffdioxid in Form von Karbonaten in dem Ziegel angereichert und dementsprechend wird der Karbonatgehalt des Ziegels erhöht und Kohlenstoffdioxid bei dieser chemischen Reaktion verbraucht. Hierdurch kann Kohlenstoffdioxid in der Massenware Ziegel effizient gebunden und ein Beitrag zur Bekämpfung des Klimawandels geleistet werden. Das zur Begasung der Ziegel eingesetzte Kohlenstoffdioxid kann aus Prozessen der Ziegelherstellung selbst oder aus anderweitigen Prozessen, bei welchen Kohlenstoffdioxid freigesetzt wird, stammen. Das in unterschiedlichen Prozessen als Abfallprodukt erzeugte Treibhausgas Kohlenstoffdioxid kann somit sinnvoll in Form von Karbonaten in den Ziegeln gebunden werden.

Die Unteransprüche betreffen weitere vorteilhafte Ausgestaltungen der Erfindung. Ausdrücklich wird hiermit auf den Wortlaut der Patentansprüche Bezug genommen, wodurch die Patentansprüche an dieser Stelle durch Bezugnahme in die Beschreibung eingefügt sind und als wörtlich wiedergegeben gelten.

Beansprucht wird ein Verfahren zur Herstellung von Ziegeln, wobei in einem Brennschritt ein Ziegelrohling gebrannt und in einem, dem Brennschritt nachfolgenden, Karbonaterzeugungsschritt der gebrannte Ziegel unter einem vorgebbaren Druck bei einer vorgebbaren Begasungsdauer mit Kohlenstoffdioxid begast wird, wobei die Brenntemperaturen maximal 800°C betragen. Dadurch ergibt sich der Vorteil, dass Kohlenstoffdioxidemissionen bei der Ziegelherstellung verringert werden können und eine bessere Kohlenstoffdioxidbilanz als bei der kommerziellen Ziegelherstellung erreicht werden kann. Dadurch, dass in einem dem Brennschritt nachfolgenden Karbonaterzeugungsschritt der gebrannte Ziegel unter einem vorgebbaren Druck bei einer vorgebbaren Begasungsdauer mit Kohlenstoffdioxid begast wird, wird Kohlenstoffdioxid in Form von Karbonaten in dem Ziegel angereichert und dementsprechend wird der Karbonatgehalt des Ziegels erhöht und Kohlenstoffdioxid bei dieser chemischen Reaktion verbraucht. Hierdurch kann Kohlenstoffdioxid in der Massenware Ziegel effizient gebunden und ein Beitrag zur Bekämpfung des Klimawandels geleistet werden. Das zur Begasung der Ziegel eingesetzte Kohlenstoffdioxid kann aus Prozessen der Ziegelherstellung selbst oder aus anderweitigen Prozessen, bei welchen Kohlenstoffdioxid freigesetzt wird, stammen. Das in unterschiedlichen Prozessen als Abfallprodukt erzeugte Treibhausgas Kohlenstoffdioxid kann somit sinnvoll in Form von Karbonaten in den Ziegeln gebunden werden.

[weiter auf Seite 3 der ursprünglichen Beschreibung]

Der Ziegel ist bevorzugt eine Baukeramik, insbesondere ein Mauerziegel oder ein Dachziegel.

In dem Brennschritt wird wenigstens ein zuvor geformter Ziegelrohling gebrannt.

Es kann bevorzugt vorgesehen sein, dass in dem Brennschritt Brenntemperaturen von wenigstens 600°C, insbesondere wenigstens 650°C, bevorzugt wenigstens 700°C, verwendet werden. Die Dekomposition der in den Ziegelrohlingen befindlichen Karbonate beginnt bei Normaldruck bereits bei ca 600°C und sie wird durch steigende Temperaturen stark begünstigt.

Gemäß der Erfindung betragen die Brenntemperaturen maximal 800°C. Es hat sich hierbei gezeigt, dass bei niedrigen Temperaturen von kleiner gleich 900°C eine Silikatbildung nur in geringem Ausmaß stattfindet, wodurch eine höhere Menge an Kohlenstoffdioxid in dem Ziegel als Karbonat gebunden werden kann.

Der Ziegelrohling kann vor dem Brennschritt in einem Formschritt unter einem oder mehreren vorgegebenen Drücken gepresst worden sein.

In dem Karbonaterzeugungsschritt wird der gebrannte Ziegel mit Kohlenstoffdioxid begast, wodurch das Kohlenstoffdioxid in Form von Karbonaten in dem gebrannten Ziegel angereichert und gespeichert wird. Das Kohlenstoffdioxid wird mittels einer chemischen Reaktion insbesondere als Kalziumkarbonat aber auch als CaMg-Karbonat und/oder Mg-Karbonat in bzw. an dem Ziegel gebunden. Der Ziegel fungiert hierbei als Karbonatspeicher.

Es kann besonders bevorzugt vorgesehen sein, dass mehrere Ziegelrohlinge in einem dem Brennschritt vorhergehenden Stapelungsschritt auf einer Transportvorrichtung angeordnet, nachfolgend in einen Brennofen bewegt und in dem Brennschritt in dem Brennofen gebrannt werden. Hierbei sind die Ziegelrohlinge bereits vor dem Stapelungsschritt geformt.

Bevorzugt kann vorgesehen sein, dass die Transportvorrichtung ein Wagen ist, welcher insbesondere mehrere Ebenen für die Ziegel aufweist.

Die Ziegelrohlinge werden auf dem Wagen insbesondere gestapelt. Gestapelt bedeutet hierbei, dass die Ziegelrohlinge auf den verschiedenen Ebenen des Wagens insbesondere beabstandet voneinander angeordnet werden, damit möglichst viel Oberfläche bzw. Reaktionsoberfläche der Ziegel mit dem gasförmigen Kohlenstoffdioxid in Kontakt kommt.

Der Wagen wird insbesondere in einem automatisierten Prozess in die Brennkammer gefahren. Es kann hierzu vorgesehen sein, dass mehrere Wägen in kontinuierlichen zeitlich voneinander getrennten Abständen automatisiert in den Brennofen gefahren werden.

Alternativ kann vorgesehen sein, dass mehrere Wägen diskontinuierlich in den Brennofen bewegt werden.

Es kann auch bevorzugt vorgesehen sein, dass sich während des Brennschrittes mehrere Wägen gleichzeitig in dem Brennofen befinden. Dies kann insbesondere bei der bevorzugten Verwendung eines Tunnelofens als Brennofen der Fall sein.

Es kann bevorzugt vorgesehen sein, dass nach dem Brennschritt die gebrannten Ziegel auf der Transportvorrichtung in dem Karbonaterzeugungsschritt mit Kohlenstoffdioxid begast werden. Hierbei können die gebrannten Ziegel auf der Transportvorrichtung, insbesondere auf dem Wagen, nach dem Brennschritt mit Kohlenstoffdioxid begast werden und die Ziegel müssen nicht extra von der Transportvorrichtung heruntergenommen und in dem Brennofen geschlichtet werden, wodurch Zeit eingespart wird.

Es kann bevorzugt vorgesehen sein, dass der Karbonaterzeugungsschritt in einer Druckkammer erfolgt. Die Begasung mit Kohlenstoffdioxid kann automatisch und programmgesteuert erfolgen, sofern sich die Transportvorrichtung in der Druckkammer befindet. Ob sich die Transportvorrichtung, insbesondere der Wagen, in der Druckkammer befindet, kann einfach mittels Sensoren überprüft werden. Solche Sensoren können beispielsweise optische Sensoren oder Drucksensoren umfassen.

Es kann bevorzugt vorgesehen sein, dass mehrere Wägen nacheinander über ein Schleusensystem in die Druckkammer bewegt werden. Hierdurch kann in der Druckkammer der vorgegebene Kohlenstoffdioxidpartialdruck im Wesentlichen kontinuierlich aufrechterhalten werden und muss nicht pro Wagen neu eingestellt werden, wodurch Zeit gespart werden kann und der Prozess einfach und effizient durchführbar ist.

Alternativ kann vorgesehen sein, dass Transportvorrichtungen, insbesondere Wägen, kontinuierlich in die Druckkammer bewegt werden. Dies kann insbesondere bei der Begasung mit Kohlenstoffdioxid unter Normaldruck der Fall sein. Der Karbonaterzeugungsschritt kann hierbei in einer einfachen Kammer durchgeführt werden.

Es kann besonders bevorzugt vorgesehen sein, dass der Kohlenstoffdioxidpartialdruck wenigstens 0,1 MPa, insbesondere wenigstens 0,5 MPa, bevorzugt wenigstens 1 MPa, beträgt. Unter solch erhöhten Drücken können Ziegel effizient mit Karbonaten angereichert werden.

Es kann weiters bevorzugt vorgesehen sein, dass die Begasungsdauer wenigstens 5 Minuten, insbesondere wenigstens 10 Minuten, bevorzugt wenigstens 15 Minuten, beträgt. Bereits bei diesen geringen Zeiträumen konnte eine - wirtschaftlich gesehen - in ökonomischen Zeiträumen durchführbare Karbonatanreicherung in den Ziegeln festgestellt werden.

Es kann bevorzugt vorgesehen sein, dass die gebrannten Ziegel am Anfang des Karbonaterzeugungsschrittes eine Restwärme von wenigstens 25°C, insbesondere wenigstens 50°C, bevorzugt wenigstens 75°C, aufweisen. Es hat sich gezeigt, dass die Anreicherung von Karbonaten in Ziegeln in dem Karbonaterzeugungsschritt besonders gut funktioniert, wenn die Ziegel erwärmt sind bzw. wenn die Ziegel eine Temperatur größer der Raumtemperatur, insbesondere größer 20°C, aufweisen.

Es kann hierzu bevorzugt vorgesehen sein, dass die Transportvorrichtung mit den darauf angeordneten Ziegeln nach dem Brennschritt automatisiert in die Druckkammer bewegt wird. Aufgrund der Geschwindigkeit der Transportvorrichtung und dem Weg, welchen die Transportvorrichtung von dem Brennofen bis zu der Druckkammer zurücklegt, kann der Temperaturabfall der Ziegel pro Zeiteinheit beispielsweise empirisch ermittelt und die Temperatur der Ziegel im Wesentlichen unmittelbar vor der Druckkammer genau durch die Geschwindigkeit der Transportvorrichtung eingestellt werden. Hierzu können zu unterschiedlichen Brenntemperaturen an der Anlage Versuchsreihen durchgeführt werden.

Es können weiters Sensoren verwendet werden, um die Temperatur der Ziegel nach dem Brennschritt außerhalb des Brennofens oder bevorzugt in der Druckkammer selbst genau zu ermitteln. Es könnten zur kontaktlosen Messung hierbei beispielsweise Infrarotthermometer eingesetzt werden, um die Temperatur der Ziegel nach dem Brennschritt zu ermitteln.

Alternativ könnten auch Kontaktthermometer zur Ermittlung der Temperatur der Ziegel eingesetzt werden.

Es kann auch bevorzugt vorgesehen sein, dass der Karbonaterzeugungsschritt bei einer Temperatur von wenigstens 50°C erfolgt. Sofern die Restwärme der Ziegel unter 50°C liegt oder diese Mindesttemperatur über ein längeres Zeitintervall konstant aufrechterhalten werden soll, kann bevorzugt vorgesehen sein, dass die Ziegel in dem Karbonaterzeugungsschritt auf wenigstens 50°C aufgeheizt werden.

Es hat sich überraschender Weise gezeigt, dass die Karbonatanreicherung in den Ziegeln durch einen Synergieeffekt der zuvor genannten Mindesttemperaturen und Mindestdrücke besonders effizient erfolgt. Insbesondere bei Temperaturen von wenigstens 50°C konnte eine besonders effiziente Anreicherung von Karbonaten in den Ziegeln festgestellt werden. Erhöhte Drücke trugen weiters dazu bei, dass Karbonate besonders schnell und effizient in den Ziegeln angereichert werden konnten.

Sofern Restwärme aus dem Brennschritt in den Ziegeln vorhanden ist, kann weiters in dem Karbonaterzeugungsschritt Energie gespart werden, da die Ziegel entweder gar nicht oder nur geringfügig erwärmt werden müssen, um obig genannte Mindesttemperaturen zu erreichen.

Besonders bevorzugt kann vorgesehen sein, dass die gebrannten Ziegel vor dem Karbonaterzeugungsschritt angefeuchtet werden. Es hat sich hierbei gezeigt, dass durch das Anfeuchten der Ziegel, insbesondere mit Wasser, die Karbonatanreicherung an bzw. in den Ziegeln stark begünstigt wird.

Hierzu kann vorgesehen sein, dass die gebrannten Ziegel im Wesentlichen unmittelbar vor dem Karbonaterzeugungsschritt, demnach vor der Begasung mit Kohlenstoffdioxid, angefeuchtet werden.

Weiters ist ein Ziegel vorgesehen, welcher nach dem zuvor beschriebenen Verfahren hergestellt wurde und welcher einen Karbonatgehalt mit einem Masseanteil von mindestens 1%, bevorzugt mindestens 5%, insbesondere mindestens 10%, aufweist.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Das Bindewort "oder" ist als inklusiv und nicht als exklusiv zu interpretieren. Sofern es sich aus dem Kontext nicht anders ergibt, umfasst "A oder B" auch "A und B", wobei "A" und "B" beliebige Merkmale darstellen.

Mittels eines ordnenden Zahlwortes, beispielweise "erster", "zweiter" oder "dritter", werden insbesondere ein Merkmal X bzw. ein Gegenstand Y in mehreren Ausführungsformen unterschieden, sofern dies nicht durch die Offenbarung der Erfindung anderweitig definiert wird. Insbesondere bedeutet ein Merkmal X bzw. Gegenstand Y mit einem ordnenden Zahlwort in einem Anspruch nicht, dass eine unter diesen Anspruch fallende Ausgestaltung der Erfindung ein weiteres Merkmal X bzw. einen weiteren Gegenstand Y aufweisen muss.

## Patentansprüche

1. Verfahren zur Herstellung von Ziegeln, wobei in einem Brennschritt Ziegelrohlinge gebrannt und in einem, dem Brennschritt nachfolgenden, Karbonaterzeugungsschritt der gebrannte Ziegel unter einem vorgebbaren Druck bei einer vorgebbaren Begasungsdauer mit Kohlenstoffdioxid begast wird, **dadurch gekennzeichnet, dass** die Brenntemperaturen maximal 800°C betragen.

2. Verfahren nach Anspruch 1, **dadurch gekennzeichnet, dass** mehrere Ziegelrohlinge in einem dem Brennschritt vorhergehenden Stapelungsschritt auf einer Transportvorrichtung angeordnet, nachfolgend in einen Brennofen bewegt und in dem Brennschritt in dem Brennofen gebrannt werden.

3. Verfahren nach Anspruch 2, **dadurch gekennzeichnet, dass** nach dem Brennschritt die gebrannten Ziegel auf der Transportvorrichtung in dem Karbonaterzeugungsschritt mit Kohlenstoffdioxid begast werden.

4. Verfahren nach einem der Ansprüche 1 bis 3, **dadurch gekennzeichnet, dass** der Karbonaterzeugungsschritt in einer Druckkammer erfolgt.

5. Verfahren nach einem der Ansprüche 1 bis 4, **dadurch gekennzeichnet, dass** der Kohlenstoffdioxidpartialdruck wenigstens 0,1 MPa, insbesondere wenigstens 0,5 MPa, bevorzugt wenigstens 1 MPa, beträgt.

6. Verfahren nach einem der Ansprüche 1 bis 5, **dadurch gekennzeichnet, dass** die Begasungsdauer wenigstens 5 Minuten, insbesondere wenigstens 10 Minuten, bevorzugt wenigstens 15 Minuten, beträgt.

7. Verfahren nach einem der Ansprüche 1 bis 6, **dadurch gekennzeichnet, dass** die gebrannten Ziegel am Anfang des Karbonaterzeugungsschrittes eine Restwärme von wenigstens 25°C, insbesondere wenigstens 50°C, bevorzugt wenigstens 75°C, aufweisen.

8. Verfahren nach einem der Ansprüche 1 bis 6, **dadurch gekennzeichnet, dass** der Karbonaterzeugungsschritt bei einer Temperatur von wenigstens 50°C erfolgt.

9. Verfahren nach einem der Ansprüche 1 bis 8, **dadurch gekennzeichnet, dass** die gebrannten Ziegel vor dem Karbonaterzeugungsschritt angefeuchtet werden.

## Claims

1. Method for manufacturing bricks, wherein brick blanks are fired in a firing step and, in a carbonate production step following the firing step, the fired brick is exposed to carbon dioxide under a pre-settable pressure for a pre-settable gassing period, **characterized in that** the firing temperatures are a maximum of 800°C.

2. Method according to claim 1, **characterized in that** a plurality of brick blanks are arranged on a transport device in a stacking step preceding the firing step, then moved into a kiln and fired in the firing step in the kiln.

3. Method according to claim 2, **characterized in that** after the firing step, the fired bricks on the transport device are exposed to carbon dioxide in the carbonate production step.

4. Method according to one of claims 1 to 3, **characterized in that** the carbonate production step takes place in a pressure chamber.

5. Method according to one of the claims 1 to 4, **characterized in that** the partial pressure of carbon dioxide is at least 0.1 MPa, in particular at least 0.5 MPa, preferably at least 1 MPa.

6. Method according to one of the claims 1 to 5, **characterized in that** the gassing time is at least 5 minutes, in particular at least 10 minutes, preferably at least 15 minutes.

7. Method according to one of the claims 1 to 6, **characterized in that** the fired bricks have a residual heat of at least 25°C, in particular at least 50°C, preferably at least 75°C, at the beginning of the carbonate production step.

8. Method according to one of claims 1 to 6, **characterized in that** the carbonate production step takes place at a temperature of at least 50°C.

9. Method according to one of claims 1 to 8, **characterized in that** the fired bricks are moistened before the carbonate production step.

## Revendications

1. Procédé de fabrication de briques, dans lequel les briques crues sont cuites en une seule étape de cuisson et, dans une étape de carbonatation qui suit l'étape de cuisson, les briques cuites sont exposées à du dioxyde de carbone sous une pression prédéterminée pendant une durée de gazage prédéterminée, **caractérisé en ce que** les températures de cuisson sont de 800°C au maximum.

2. Procédé selon la revendication 1, **caractérisé en ce que** plusieurs briques crues sont disposées sur un dispositif de transport lors d'une étape d'empilage précédant l'étape de cuisson, puis déplacées dans un four de cuisson et cuites dans le four de cuisson lors de l'étape de cuisson.

3. Procédé selon la revendication 2, **caractérisé en ce qu'**après l'étape de cuisson, les briques cuites sont exposées à du dioxyde de carbone sur le dispositif de transport lors de l'étape de carbonatation.

4. Procédé selon l'une des revendications 1 à 3, **caractérisé en ce que** l'étape de carbonatation a lieu dans une chambre de pression.

5. Procédé selon l'une des revendications 1 à 4, **caractérisé en ce que** la pression partielle de dioxyde de carbone est d'au moins 0,1 MPa, en particulier d'au moins 0,5 MPa, de préférence d'au moins 1 MPa.

6. Procédé selon l'une des revendications 1 à 5, **caractérisé en ce que** la durée de gazage est d'au moins 5 minutes, en particulier d'au moins 10 minutes, de préférence d'au moins 15 minutes.

7. Procédé selon l'une des revendications 1 à 6, **caractérisé en ce que** les briques cuites présentent au début de l'étape de carbonatation une chaleur résiduelle d'au moins 25 °C, en particulier d'au moins 50 °C, de préférence d'au moins 75 °C.

8. Procédé selon l'une des revendications 1 à 6, **caractérisé en ce que** l'étape de carbonatation est effectuée à une température d'au moins 50 °C.

9. Procédé selon l'une des revendications 1 à 8, **caractérisé en ce que** les briques cuites sont humidifiées avant l'étape de carbonatation.
